# EUROPÄISCHE PATENTSCHRIFT

(11) **EP 0 581 784 B1**
(45) Veröffentlichungstag und Bekanntmachung des Hinweises auf die Patenterteilung: **02.06.1999**
(21) Anmeldenummer: 92907065.4
(22) Anmeldetag: 30.03.1992
(51) Int. Cl.: B01J 35/04, F01N 3/20

(54) **ELEKTRISCH BEHEIZBARER WABENKÖRPER**
ELECTRICALLY HEATABLE HONEYCOMB BODY
CORPS EN NID D'ABEILLE POUVANT ETRE CHAUFFE ELECTRIQUEMENT

(30) Priorität: 10.04.1991 DE 4111712
(43) Veröffentlichungstag der Anmeldung: 09.02.1994
(73) Patentinhaber: Emitec Gesellschaft für Emissionstechnologie mbH, 53797 Lohmar (DE)
(72) Erfinder: BRÜCK, Rolf, D-5060 Bergisch Gladbach 1 (DE); BREUER Hans-Jürgen, D-5063 Overath 7 (DE)
(74) Vertreter: Kahlhöfer, Hermann, Dipl.-Phys.
(86) Internationale Anmeldenummer: EP9200701
(87) Internationale Veröffentlichungsnummer: WO9218245

(56) Entgegenhaltungen:
- EP-A- 0 035 053
- EP-A- 0 483 705
- WO-A-89/10471
- DE-U- 8 812 924

## Beschreibung

Die Erfindung betrifft einen elektrisch beheizbaren Wabenkörper, der eine Achse, einen diese umgebenden Innenbereich und einen von der Achse beabstandeten Außenbereich sowie zwischen dem Innenbereich und dem Außenbereich zumindest einen aus zumindest einem Blech bestehenden Stapel aufweist, der nach Art einer Spirale mit einer Vielzahl von Windungen um den Innenbereich gewunden ist.

Derartige Wabenkörper, aufgebaut aus aus Blechen geschichteten und gewundenen oder verschlungenen Stapeln, sind beschrieben in der EP 0 245 736 B1, der EP 0 245 737 B1 und der WO 90/03220 A1. Auch die Verwendung solcher Wabenkörper als Träger für Katalysatoren, insbesondere zum Einsatz in Kraftfahrzeug-Abgassystemen zur Beseitigung von Schadstoffen in den Abgasen der die Kraftfahrzeuge antreibenden Brennkraftmaschinen, ist in diesen Schriften ausführlich erläutert. Eine besonders vorteilhafte Weiterbildung eines metallischen Wabenkörpers als Träger für einen Katalysator ist das Vorsehen einer direkten elektrischen Beheizung, da ein üblicher Katalysator zur Umsetzung von Schadstoffen im Abgas einer Brennkraftmaschine seine Wirksamkeit erst bei Temperaturen oberhalb von etwa 200° C entfaltet und somit erst nach eventuell mehrminütiger Verzögerung ab dem Beginn der Beaufschlagung mit Abgas aktiv wird. Zur Beschleunigung der Aktivierung eines Katalysators, insbesondere eines Katalysators im Abgassystem eines Kraftfahrzeuges, ist daher eine Beheizung höchst wünschenswert. Als solche bietet sich im Falle eines metallischen Wabenkörpers insbesondere die direkte elektrische Beheizung an, wofür der Wabenkörper mit elektrischem Strom, beispielsweise aus der Batterie des Kraftfahrzeuges, in dessen Abgassystem der Wabenkörper eingesetzt ist, zu beaufschlagen wäre. Bauartbedingt beträgt allerdings der elektrische Widerstand eines in einem Abgassystem einzusetzenden Wabenkörpers der in den erwähnten Schriften beschriebenen Art höchstens etwa ein hundertstel Ohm; ein solcher Wabenkörper ist nicht an eine übliche Kraftfahrzeug-Batterie-anschließbar, ohne diese in unzuträglicher Weise zu belasten. Angesichts dieser Problematik sind bereits Maßnahmen erwogen worden, den elektrischen Widerstand eines Wabenkörpers zu erhöhen und insbesondere zur Anwendung in Kraftfahrzeugen zu Wabenkörpern zu kommen, die ohne unzuträgliche Belastung der üblicherweise zur Verfügung stehenden Quellen elektrischer Energie in kurzen Zeiten hinreichend aufheizbar sind. Entsprechend wird gemäß der WO 89/10470 A1 und der WO 89/10471 A1 ein Wabenkörper durch Spalte und/oder elektrisch isolierende Zwischenschichten so unterteilt, daß sich zumindest ein elektrischer Strompfad durch den Wabenkörper mit einem elektrischen Widerstand in der gewünschten Größenordnung, insbesondere in der Größenordnung um etwa 0,1 Ohm, ergibt. Die in beiden Schriften ausgeführten Lösungen des Problems des elektrischen Widerstandes können jedoch eventuell zu Schwierigkeiten führen, wenn die elektrisch zu beheizenden Wabenkörper hohen mechanischen Belastungen widerstehen sollen; die keramischen Schichten und vor allem die eventuell vorzusehenden Spalte zwischen den einzelnen Blechlagen oder Windungen erfordern den Verzicht auf Verbindungsstellen zwischen den Blechen im Wabenkörper, lockern seine Struktur auf und vermindern unter Umständen seine Steifigkeit; die Belastbarkeit eines solchen Wabenkörpers durch Vibrationen und dergleichen kann im Vergleich zu nicht zur elektrischen Beheizung ausgelegten, ansonsten gleichartigen Wabenkörpern eingeschränkt sein.

In der DE-U-88 12 924 ist ein Trägerkörper für einen katalytischen Reaktor zur Abgasreinigung beschrieben. Der Trägerkörper besteht aus mindestens einem metallischen Wellband und mindestens einem Glattband, die zu einer ein- oder mehrgängigen Spirale mit aneinandergrenzenden Lagen eines Wabenkörpers gewickelt sind. Zwischen dem Glattband und der benachbarten Wickellage des Wellbandes ist ein weiteres Glattband vorgesehen. Der DE-U-88 12 924 ist jedoch nicht zu entnehmen, daß der beschriebene Wabenkörper direkt elektrisch beheizbar sei.

Ein weiterer Trägerkörper für einen katalytischen Reaktor zur Abgasreinigung ist in der EP 0 483 705 A1 beschrieben. Der elektrisch beheizbare Trägerkörper besteht aus schräg zueinander verlaufenden und gewellten Blechen. Zwischen den gewellten Blechen werden Lotfolien eingewickelt, um die schräg zueinander verlaufenden Wellungen der Bleche an ihren Kontaktstellen verlöten zu können. Das Einwickeln von Lotfolie führt allerdings dazu, daß Verbindungsstellen dicht nebeneinander und an allen Berührungsstellen der Bleche in einem Querschnittsbereich mit Lotfolie entstehen, so daß hinsichtlich des Verlaufes des elektrischen Stromes in dem Trägerkörper die Verbindungsstellen bzw. die Berührungsstellen der Bleche jeweils eine elektrisch leitende Brücke darstellen.

Mit der vorliegenden Erfindung soll ein elektrisch beheizbarer Wabenkörper, d. h. ein elektrisch leitfähiger Wabenkörper mit einem elektrischen Widerstand in einer praktikablen Größenordnung, angegeben werden, der gegenüber den beheizbaren Wabenkörpern des Standes der Technik eine festere Struktur und damit eine verbesserte Haltbarkeit unter harten mechanischen Beanspruchungen aufweist.

Die erfindungsgemäße Lösung dieses Problems bildet ein elektrisch beheizbarer Wabenkörper, der
a) eine Achse, einen die Achse umgebenden Innenbereich und einen von der Achse beabstandeten Außenbereich hat;
b) zwischen dem Innenbereich und dem Außenbereich zumindest einen aus zumindest einem Blech bestehenden Stapel aufweist der nach Art einer Spirale mit einer Vielzahl von Windungen ohne spiralförmig mit eingewickelte Lotbleche oder Lotfolien um den Innenbereich gewunden ist, wobei die Windungen eine Mehrzahl von Windungen umfassen, die paarweise einander benachbart und voneinander beabstandet und elektrisch isoliert sind;
c) eine Vielzahl von Brücken enthält, deren jede jeweils zwei einander benachbarte und voneinander beabstandete Windungen mechanisch und elektrisch miteinander verbindet; wobei
d) die Windungen und die Brücken einen mehrfach verzweigten Strompfad für einen zwischen dem Innenbereich und dem Außenbereich fließenden elektrischen Strom bilden.

In dem erfindungsgemäßen Wabenkörper gibt es neben den gemäß bekannter Praxis in dem Stapel gebildeten Verbindungen auch Brücken zwischen einander benachbarten Windungen des Stapels. Solche Brücken, die beispielsweise Lötstellen oder dergleichen sein können und gegebenenfalls mit besonderen, zwischen die Windungen eingefügten und durch Lötung, Diffusionsschweißung, Sinterung oder eine ähnliche Verbindungstechnik befestigten Bauteilen Zu erstellen sind, bilden zwar einen verzweigten Weg des elektrischen Stroms durch den Wabenkörper, so daß sich für diesen ein im Vergleich mit einem Wabenkörper ohne Brücken reduzierter elektrischer Widerstand ergibt; es hat sich jedoch herausgestellt, daß zwischen den Forderungen nach größtmöglicher mechanischer Stabilität und einem möglichst hohen elektrischen Widerstand des in dem Wabenkörper vorliegenden Strompfades ein Kompromiß möglich ist. Man kann in der Tat den Wabenkörper durch eine Vielzahl mechanischer und elektrischer Verbindungen in Form der erwähnten Brücken zwischen verschiedenen Windungen des Stapels stabilisieren, ohne daß der elektrische Widerstand des Strompfades unzuträglich verkleinert wird. Je nach Anordnung der Brücken kann sich zwar eine leichte Inhomogenität der Beaufschlagung des Wabenkörpers mit elektrischem Strom und damit eine inhomogene Temperaturverteilung bei der Beheizung ergeben; diese Inhomogenität zeitigt jedoch keine erheblichen Nachteile, da Wärmeleitung und Wärmestrahlung in dem Wabenkörper ausgleichend wirken und vor allem die in dem Wabenkörper nach der Aktivierung des Katalysators stattfindende katalysierte Reaktion die Temperaturverteilung in kurzer Zeit weitgehend unabhängig von Inhomogenitäten der anfänglichen Aktivierung homogenisiert. Das Problem der Inhomogenität ist mithin im wesentlichen beschränkt auf sehr kurze Zeiträume ab dem Beginn der Beaufschlagung des Wabenkörpers mit dem Fluid, in dem die Reaktion katalysiert werden soll.

Die Erfindung vermeidet, daß einzelne Abschnitte der Windungen von dem Fluß des elektrischen Stroms abgeschnitten und somit keine Bestandteile des Strompfades sind. Zur Vermeidung größerer Inhomogenitäten der durch die Beheizung entstehenden Temperaturverteilung ist dies besonders vorteilhaft.

Besonders günstig ist es, zwischen jeweils zwei einander benachbarten und voneinander beabstandeten Windungen in jedem um die Achse gemessenen Winkelbereich kleiner als 360° höchstens zwei Brücken vorzusehen. Bei vielen Anordnungen von Brücken fließt der elektrische Strom nicht nur in einem der zwei möglichen Drehsinne um die Achse herum, sondern in den durch die Brücken verbundenen Windungen treten Ströme in beiden Drehsinnen auf. Werden dementsprechend in dem erwähnten Winkelbereich kleiner als der Vollwinkel mehr als zwei Brücken vorgesehen, so kann unter Umständen ein zwischen zwei der drei Brücken liegender Abschnitt einer Windung vollständig überbrückt und von dem Fluß des elektrischen Stroms abgeschnitten sein. Im übrigen ist darauf hinzuweisen, daß insbesondere in jedem um die Achse gemessenen Winkelbereich kleiner als 360° die Bezeichnung "benachbarte Windungen" stets wohldefiniert ist, da in der Tat in jedem solchen Winkelbereich nebeneinanderliegende und voneinander beabstandete Windungen des Stapels, abgesehen von eventuellen Brücken, keine Verbindungen miteinander haben. Ausgehend von dieser Betrachtungsweise ist der Begriff "benachbarte" im Sinne der Erfindung zu verstehen.

Die - bis auf lokal begrenzte kleinere Inhomogenitäten - weitgehend gleichmäßige Beaufschlagung des erfindungsgemäßen Wabenkörpers mit elektrischem Strom zu Heizzwecken kann im besonderen dadurch erzielt werden, daß die Summe jeweils zweier unmittelbar aufeinanderfolgender Winkelabstände zwischen etwa 480° und etwa 600° beträgt, wobei aber zumindest einer von zwei unmittelbar aufeinanderfolgenden Winkelabständen nicht größer als 240° ist. Man betrachte hierzu einen erfindungsgemäßen Wabenkörper, dem der Strom im Außenbereich zugeführt und im Innenbereich entnommen wird. Zur hinreichend homogenen Beheizung des Wabenkörpers ist es erforderlich, den elektrischen Strom auch der dem Einspeisepunkt diametral gegenüberliegenden Seite des Wabenkörpers zuzuführen; dies ist nicht erreichbar, wenn die Brücken allzu nahe beieinander liegen. In einem solchen Falle durchsetzt der Strom lediglich eine vergleichsweise eng begrenzte Umgebung der direkten Verbindungslinie von Ein- und Ausspeisestelle; von einer gleichmäßigen Beheizung kann keine Rede mehr sein.

Vorteilhaft ist es, jeden Winkelabstand in dem erfindungsgemäßen Wabenkörper größer als etwa 120° zu halten. Eine allzu erhebliche Verringerung des Winkelabstandes zwischen zwei benachbarten Brücken führt stets dazu, daß mehr oder weniger große Abschnitte der Windungen von dem Stromfluß abgeschnitten werden und die Homogenität der Beheizung unbefriedigend wird.

In günstiger Weiterbildung des erfindungsgemäßen Wabenkörpers sind alle Winkelabstände einander etwa gleich, und jeder solcher beträgt etwa 240°. Der Wabenkörper bildet für den elektrischen Strom auf diese Weise eine besonders stark vernetzte Anordnung von elektrischen Widerständen (jedem Widerstand entspricht ein Segment des Stapels zwischen zwei Brücken), wodurch eine hinreichende Homogenität der Beheizung gewährleistet ist.

Eine andere, gleichermaßen günstige Weiterbildung des erfindungsgemäßen Wabenkörpers ist dadurch gekennzeichnet, daß ein erster Winkelabstand zwischen etwa 120° und etwa 240° und ein zweiter Winkelabstand von etwa 360° abwechselnd auftreten. Besonders günstig ist es, wenn dabei der erste Winkelabstand etwa 180° beträgt - in diesem Falle ergibt sich nämlich eine im wesentlichen gleichmäßige Beaufschlagung der Windungen mit elektrischem Strom. Sofern der Betrag des ersten Winkelabstandes von 180° wesentlich abweicht, treten natürlich gewisse Inhomogenitäten auf; die Einschränkung des ersten Winkelabstandes zwischen etwa 120° und etwa 240° gewährleistet jedoch eine hinreichende Homogenität.

Die Brücken zwischen den Windungen des Stapels in dem erfindungsgemäßen Wabenkörper werden günstigerweise streifenförmig und parallel zu der Achse ausgeführt. Die Streifenform kann dabei sowohl mit tatsächlich axial ausgedehnten Brücken als auch mit hinreichender Wirksamkeit durch Anordnungen aus im wesentlichen in Richtung der Achse hintereinanderliegenden, mehr oder weniger punktförmigen Verbindungsstellen gebildet werden. Die Brücken müssen dabei nicht unbedingt alle den gesamten Wabenkörper in axialer Richtung durchdringen; sie können z. B. auf einem axialen Teilbereich des Wabenkörpers beschränkt bleiben, welcher Teilbereich allein oder zusammen mit anderen Teilbereichen in besonderem Maße beheizt werden soll. Darüber hinaus kann durch eine axial abgestufte Anordnung der Brücken eine zusätzliche Strukturierung des Strompfades mit weiterer Erhöhung seines elektrischen Widerstandes erreicht werden.

Vorteilhaft ist es, zwischen einander benachbarte und voneinander beabstandete Windungen Isolierschichten aus keramischem Material oder dergleichen einzufügen. Solche Isolierschichten bieten nicht nur sichere Isolation der Windungen gegeneinander, sondern tragen auch zur Stabilisierung des Wabenkörpers gegen Vibrationsbelastungen und dergleichen wesentlich bei.

Zur Bildung der Brücken zwischen einander benachbarten Windungen können zwischen die Isolierschichten Blechstreifen eingefügt werden, so daß zwischen den Windungen des Wabenkörpers eine abwechselnd aus Metall und Isolator gebildete Schicht, vorzugsweise von konstanter Dicke, zu liegen kommt. Auch diese Maßnahme trägt zur Erhöhung der mechanischen Belastbarkeit des Wabenkörpers wesentlich bei.

Eine weitere Möglichkeit zur Realisierung der Isolierschichten ist der Einsatz einer keramischen Beschichtung auf zumindest einem den Stapel bildenden und begrenzenden Blech. In Anbetracht der üblicherweise zur Beheizung eines Wabenkörpers verwendeten elektrischen Spannungen - in der Regel etwa 12 V - kann durch keramische Beschichtung eines Bleches eine Isolierschicht mit ausreichender Isolation und besonders geringer Dicke realisiert werden; so beeinträchtigt die Isolierschicht das Volumen des Wabenkörpers nicht wesentlich, was seiner Festigkeit zugute kommt und seinen hydrodynamischen Widerstand gegen hindurchströmendes Fluid, insbesondere hindurchströmendes Abgas, bei dem üblichen, sehr geringen Wert beläßt.

In besonders günstiger Weiterbildung der Erfindung hat unbeschadet eventueller zusätzlicher Ausgestaltung ein Wabenkörper, der in Richtung der Achse von zwei etwa ebenen, etwa senkrecht zur Achse liegenden Stirnflächen begrenzt ist und dessen Außenbereich eine zwischen den Stirnflächen liegende, etwa parallel zu der Achse ausgerichtete, etwa zylindrische Mantelfläche aufweist, in dieser Mantelfläche etwa in der Mitte zwischen den Stirnflächen eine radial und in Umfangsrichtung verlaufende Nut, die bis zu dem Innenbereich in den Wabenkörper hineinreicht. Der Wabenkörper weist somit zwei Außenbereiche und zwei im wesentlichen voneinander getrennte Stapel auf, die jeweils in Richtung der Achse gesehen hintereinander liegen und über einen einzigen Innenbereich mechanisch und elektrisch miteinander verbunden sind. In einem solchen Wabenkörper kann die Ein- und Ausspeisung des elektrischen Stromes an jeweils einem Außenbereich erfolgen; nach Einspeisung in einer ersten Außenbereich durchquert der elektrische Strom einen ersten Stapel, fließt durch den Innenbereich in den zweiten Stapel und nach dessen Durchquerung zum zweiten Außenbereich, wo er ausgespeist wird. Im Rahmen dieser Ausbildung der Erfindung ist das Vorsehen eines Ein- oder Ausspeisekontaktes am Innenbereich des Wabenkörpers entbehrlich; damit entfallen insbesondere alle Nachteile, die mit einem am Innenbereich des Wabenkörpers vorzusehenden Kontaktes aufgrund dessen womöglich hoher Beanspruchung durch das den Wabenkörper durchströmende Fluid verbunden sein könnten.

Besonders vorteilhaft ist es weiterhin, wenn alle Windungen in dem Wabenkörper, die einander benachbart sind, auch voneinander beabstandet sind. Derart ist, unter Gewährleistung der mechanischen Stabilität, mittels der erfindungsgemäßen Brücken die Erzielung eines besonders hohen elektrischen Widerstandes möglich.

Die weitere Erläuterung der Erfindung erfolgt anhand der in der Zeichnung dargestellten Ausführungsbeispiele, die schematisiert und/oder leicht verzerrt dargestellt sind, soweit dies zur Erläuterung der spezifischen Merkmale der Erfindung dienlich ist. Im einzelnen zeigen:
Figur 1 einen Querschnitt durch einen erfindungsgemäßen Wabenkörper;
Figur 2 ein Beispiel für die äußere Formgebung eines Wabenkörpers;
Figur 3 einen Querschnitt durch eine weitere Ausführungsform des erfindungsgemäßen Wabenkörpers;
Figur 4 und Figur 5 jeweils eine Ansicht eines Stapels aus glatten und gewellten Blechen zur Bildung eines erfindungsgemäßen Wabenkörpers;
Figur 6 einen Querschnitt durch den Innenbereich eines Wabenkörpers, der durch spiraliges Aufwickeln eines Stapels gemaß Figur 4 oder Figur 5 gebildet ist;
Figur 7 einen Längsschnitt durch eine besondere Ausführungsform des erfindungsgemäßen Wabenkörpers.

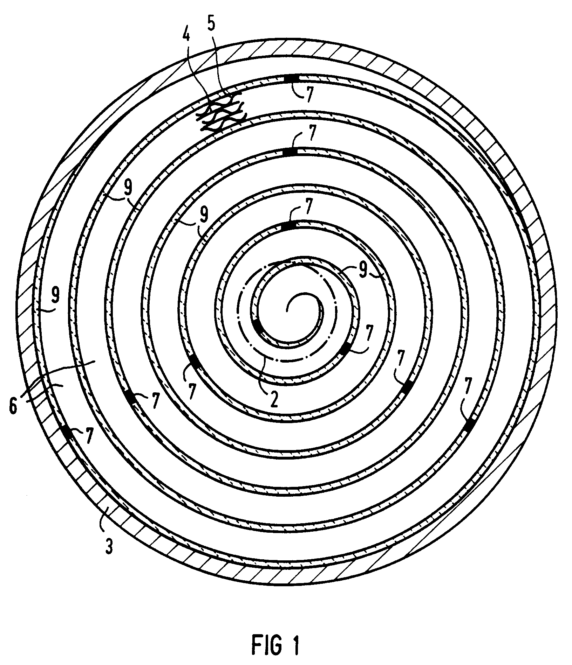

Figur 1 zeigt einen senkrecht zu der (nicht dargestellten) Achse ausgeführten Querschnitt durch einen erfindungsgemäßen Wabenkörper. Der Wabenkörper ist gebildet aus einem Stapel 6 aus glatten Blechen 4 und gewellten Blechen 5, der mit einer Vielzahl von Windungen um die (in der Mitte des Wabenkörpers zu denkende) Achse gewunden ist. Im Inneren des Wabenkörpers endet der Stapel 6 in einem Innenbereich 2; an der Außenseite wird der Wabenkörper begrenzt von einem Außenbereich 3, der insbesondere durch ein Mantelrohr gegeben sein kann, in das der vielfach gewundene Stapel 6 eingeschoben ist. Elektrischer Strom zur Beheizung des Wabenkörpers fließt im wesentlichen entlang der Windungen des Stapels 6 vom Innenbereich 2 zum Außenbereich 3, oder in umgekehrter Richtung. Damit der elektrische Strom dem Verlauf der Windungen des Stapels 6 folgt, sind je zwei einander benachbarte Windungen durch Isolierschichten 9 voneinander beabstandet und gegeneinander elektrisch isoliert. Die Isolierschichten 9 können aus keramischem Material bestehen, sie können auch einfach Spalte zwischen den einzelnen Windungen sein. Erfindungsgemäß sind die Isolierschichten 9 durchbrochen von Brücken 7, die metallische Verbindungen zwischen den einzelnen Windungen des Stapels 6 darstellen. Diese Brücken 7 dienen in erster Linie zur Verfestigung der mechanischen Struktur des Wabenkörpers, wie bereits ausführlich erläutert. Sie stellen darüber hinaus elektrische Verbindungen zwischen einander benachbarten Windungen des Stapels 6 dar; durch ihre erfindungsgemäße Anordnung ist sichergestellt, daß sie sowohl die ausreichend homogene Beheizung des Wabenkörpers durch den elektrischen Strom nicht wesentlich in Frage stellen und außerdem den elektrischen Widerstand des in dem Wabenkörper für den elektrischen Strom gebildeten Strompfades nicht unzuträglich verkleinern. Im Ausführungsbeispiel gemäß Figur 1 sind die Brücken 7 so angeordnet, daß zwei entlang der Isolierschicht 9 benachbarte Brücken 7 jeweils einen um die Achse gemessenen Winkelabstand von etwa 240° haben. Der auf diese Weise gebildete Strompfad stellt ein besonders stark verzweigtes Netz aus elektrischen Widerständen dar, wodurch die ausreichend homogene Beheizung des Wabenkörpers gewährleistet werden kann. Außerdem ergibt die Anordnung der Brücken 7 auf drei von der Achse radial nach außen führenden Linien eine besonders effiziente Verstärkung der Struktur des Wabenkörpers.

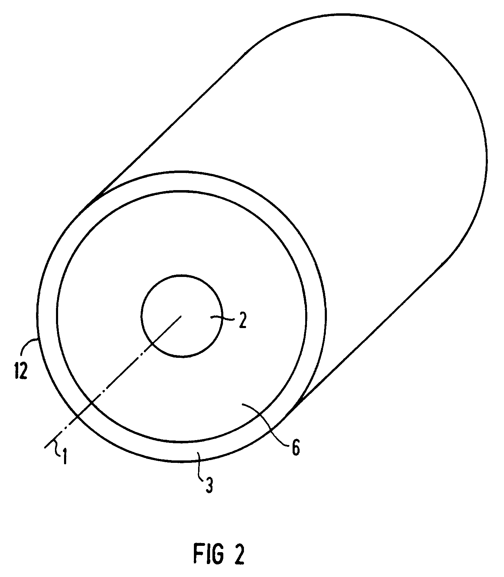

Figur 2 zeigt eine Außenansicht eines Wabenkörpers, wie er nach der Erfindung aussehen könnte. Der Wabenkörper ist zylindrisch, und Achse 1 ist die Mittellinie. Der Innenbereich 2 des Wabenkörpers ist ein ebenfalls etwa zylindrischer Bereich, der unmittelbar die Achse 1 umgibt; an ihn schließt sich der gewundene Stapel 6 an, welcher von dem Außenbereich 3 umgrenzt wird. Die Stirnfläche 12 des Wabenkörpers, also die Fläche, aus der die Achse 1 austritt, ist im wesentlichen eben und liegt senkrecht zur Achse 1.

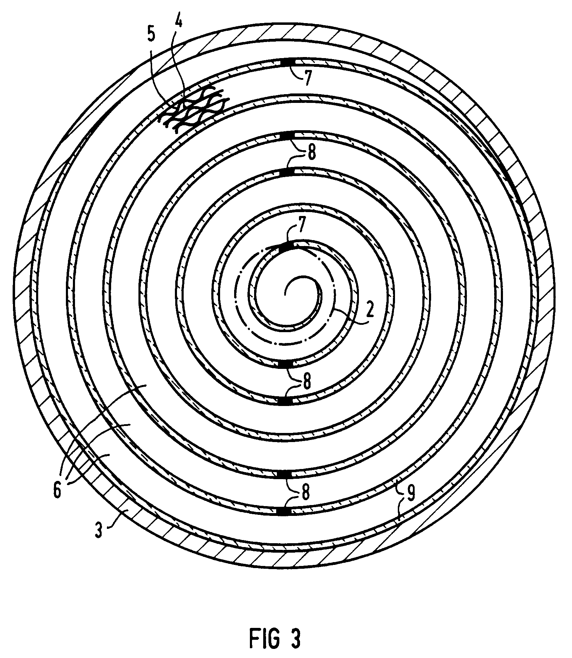

Figur 3 zeigt einen Querschnitt (wie zu Figur 1 bereits erläutert) durch eine andere Ausführungsform des erfindungsgemäßen Wabenkörpers. Der zwischen Innenbereich 2 und Außenbereich 3 liegende gewundene Stapel 6 aus glatten Blechen 4 und gewellten Blechen 5 weist eine Vielzahl von Windungen auf, die alle durch Isolierschichten 9 voneinander beabstandet sind. Verbindungen zwischen den Windungen liegen vor in Form einzelner Brücken 7 in der Nähe des Außenbereiches 3 bzw. des Innenbereiches 2 und gepaarter Brücken 8, wobei zwei gepaarte Brücken 8 jeweils Winkelabstände von 360°, gemessen um die (nicht dargestellte) Achse, haben. Ein Wabenkörper gemäß Figur 3 wird von den zwischen Innenbereich 2 und Außenbereich 3 fließenden elektrischen Strom im wesentlichen gleichmäßig durchflossen. Alle Brücken 7 und 8 liegen im wesentlichen auf einer durch den Mittelpunkt des Querschnittes führenden Geraden (und damit günstigerweise, für den gesamten Wabenkörper gesprochen, in einer die Achse enthaltenden Ebene), und der entlang des Stapels 6 fließende elektrische Strom läuft in mäandrierender Weise von Brücke 7,8 zu Brücke 7,8.

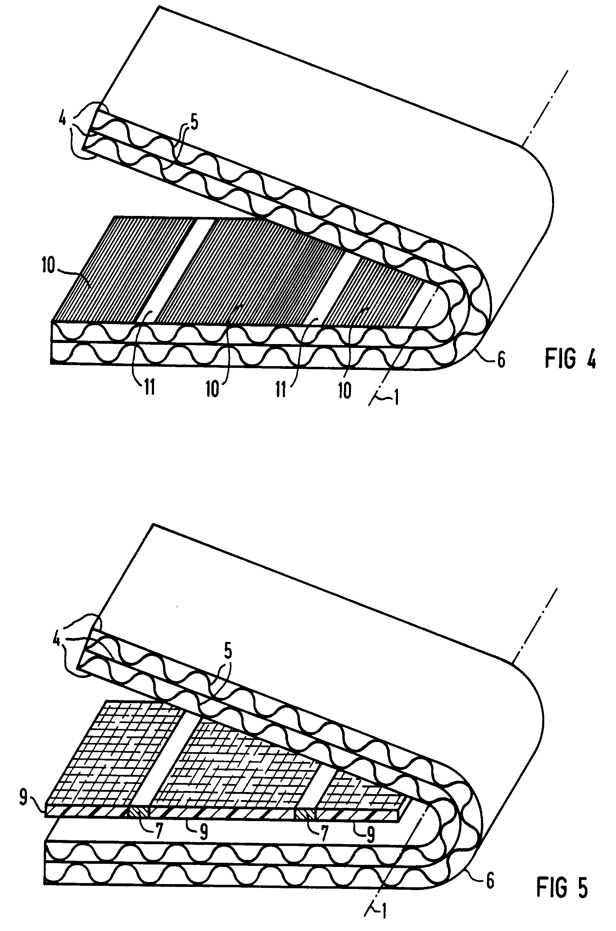

Figur 4 zeigt eine Möglichkeit zur Bildung eines Stapels 6 aus glatten Blechen 4 und gewellten Blechen 5. Dabei wird die Anordnung der Bleche 4 und 5 um die Achse 1 gefaltet; die gefaltete Anordnung kann anschließend um die Achse 1 spiralig verwunden werden. Die Isolierschicht 9 ist im Ausführungsbeispiel eine keramische Beschichtung 10 eines der glatten Bleche 4, nämlich des Bleches, das im Inneren der gefalteten Anordnung auf sich selbst zu liegen kommt. Die keramische Beschichtung 10 kann beispielsweise durch Plasmasprühen oder dergleichen aufgebracht werden. Zur Bildung der Brücken 7, 8 ist die keramische Beschichtung 10 mit Aussparungen 11 versehen, bei denen das beschichtete Blech 4 auf sich selbst zu liegen kommt, so daß ein elektrisch belastbarer Kontakt entsteht. Eventuell kann der Kontakt in den Aussparungen 11 noch verbessert werden, wenn zumindest in den Aussparungen 11 auf das Blech ein Lot oder dergleichen aufgetragen wird, das in einem an den Zusammenbau des Wabenkörpers angeschlossenen Wärmebehandlungsprozeß eine Lötverbindung oder dergleichen zwischen zwei Windungen des Stapels bildet; je nachdem, welcher Wärmebehandlungsprozeß verwendet wird, kann es auch zu einer Sinterung oder Diffusionsverschweißung kommen, welche eine elektrisch und mechanisch hinreichend gute Verbindung bilden kann, so daß die Verwendung von Loten und dergleichen entbehrlich ist.

Figur 5 zeigt eine zweite Möglichkeit zur Bildung eines Stapels 6 aus glatten Blechen 4 und gewellten Blechen 5. Wiederum werden die Bleche 4 und 5 um die Achse 1 gefaltet; in das Innere des Stapels 6 werden jedoch Isolierschichten 9 aus keramischem oder mineralischem Material, beispielsweise Matten oder Vliese aus keramischen oder anderen mineralischen Fasern, sowie Brücken 7 in Form von Blechstreifen oder dergleichen eingelegt. Der Zusammenbau des Wabenkörpers erfolgt wie zu Figur 4 erläutert. Zu bemerken ist, daß die in der Zeichnung dargestellten Ausführungsbeispiele mit einem Stapel 6 aus glatten Blechen 4 und gewellten Blechen 5 keineswegs die einzigen Möglichkeiten zur Realisierung der Erfindung darstellen; insbesondere ist es möglich, Stapel 6 zu verwenden, die ausschließlich aus gewellten Blechen 5 bestehen, wobei u. U. mehrere unterschiedlich gewellte Bleche zum Einsatz kommen können. Auch kann anstelle eines vollständig glatten Bleches 4 ein Blech mit sehr kleiner "Mikro-Wellung" verwendet werden.

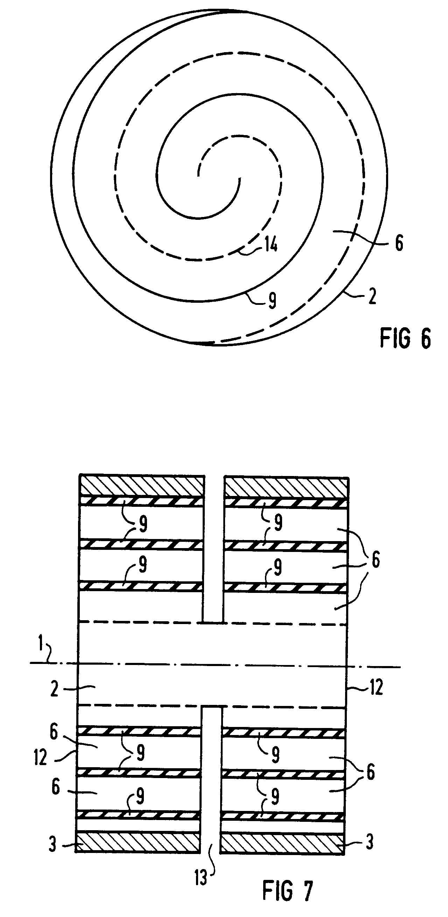

Figur 6 zeigt, wie der Innenbereich 2 eines mit einem Stapel gemäß Figur 4 oder Figur 5 gebildeten Wabenkörpers aussieht. Die Isolierschicht 9 (die u. U. durch die in Figur 4 gezeigte keramische Beschichtung 10 gebildet wird) ist dargestellt als durchgezogene spiralige Linie, die äußere Berandung 14 des Stapels 6 ist angedeutet durch eine gestrichelte Spirale 14. Es sei darauf hingewiesen, daß aus Figur 6 die Ähnlichkeit eines aus einem gefalteten Stapel 6 gewundenen Wabenkörpers mit einem durch S-förmige Verschlingung eines Stapels gebildeten Wabenkörpers, wie er aus den zitierten Schriften zum Stand der Technik hervorgeht, ersichtlich ist. Außerdem ist zu bemerken, daß die Erfindung keineswegs Stapel 6 erfordert, die bis in den Innnenbereich 2 des Wabenkörpers hineinreichen. Insbesondere kann, wie auch bereits im Stand der Technik beschrieben, der Innenbereich 2 ein von dem Stapel 6 unabhängiges Bauelement sein, in den die den Stapel 6 bildenden Bleche 4, 5 eingehängt sind. Die Windungen kann der Stapel 6 in diesem Fall erhalten durch evolventenförmgie Verschlingung der Bleche 4,5 um den Innenbereich 2. Der Wabenkörper gemäß Figur 6 ist auch deutbar als gebildet durch Verwindung zweier Stapel 6, die im Innenbereich 2 zusammenhängen. In diesem Sinne sind Windungen abgeteilt sowohl durch die "Berandung" 14 als auch durch die Isolierschicht 9; dabei sind nicht alle Windungen paarweise voneinander beabstandet, sondern an der Berandung 14 liegen jeweils zwei einander benachbarte Windungen unmittelbar aneinander.

Figur 7 zeigt eine besondere Ausgestaltung des erfindungsgemäßen Wabenkörpers im Längsschnitt. Der Wabenkörper ist etwa zylindrisch bezüglich der Achse 1 mit senkrecht zur Achse 1 liegenden Stirnflächen 12. In den Außenbereich 3 und den Stapel 6 des Wabenkörpers ist eine bis zum Innenbereich 2 reichende, die Achse 1 umlaufende Nut 13 eingebracht. Diese Konstruktion erlaubt es, dem Wabenkörper den elektrischen Strom an seiner Außenseite zuzuführen und an seiner Außenseite zu entnehmen; hierzu wird der Strom einem auf einer ersten Seite der Nut 13 liegenden Außenbereich 3 zugeführt und dem auf der anderen Seite der Nut 13 liegenden Außenbereich wieder entnommen. Aufwendig herzustellende und hinsichtlich ihrer Festigkeit und Dauerhaftigkeit bedenkliche Kontakte am Innenbereich 2 des Wabenkörpers sind somit entbehrlich. Zu bemerken ist, daß in Figur 7 lediglich Isolierschichten 9, nicht aber Brücken 7 oder 8 dargestellt sind; die Anordnung dieser Brücken ist von der in Figur 7 dargestellten besonderen Einzelheit unabhängig und kann im Sinne der Erfindung beliebig, beispielsweise im Rahmen der in Figur 1 und Figur 3 dargestellten Möglichkeiten, erfolgen.

Der erfindungsgemäße elektrisch leitfähige Wabenkörper besitzt zur Durchleitung eines elektrischen Stromes einen Strompfad mit einem elektrischen Widerstand in einer vorteilhaften Größenordnung und weist eine im besonderen Maße mechanisch belastbare Struktur auf.

## Patentansprüche

1. Elektrisch beheizbarer Wabenkörper, der
a) eine Achse (1), einen die Achse (1) umgebenden Innenbereich (2) und einen von der Achse (1) beabstandeten Außenbereich (3) hat;
b) zwischen dem Innenbereich (2) und dem Außenbereich (3) zumindest einen aus zumindest einem Blech (4, 5) bestehenden Stapel (6) aufweist, der nach Art einer Spirale mit einer Viehzahl von Windungen ohne spiralförmig mit eingewickelte Lotbleche oder Lotfolien um den Innenbereich (2) gewunden ist, dadurch gekennzeichnet daß Windungen eine Mehrzahl von Windungen umfassen, die paarweise einander benachbart und voneinander beabstandet und elektrisch isoliert sind;
c) eine Vielzahl von Brücken (7, 8) aufweist, deren jede jeweils zwei einander benachbarte und voneinander beabstandete Windungen mechanisch und elektrisch miteinander verbindet; wobei
d) die Windungen und die Brücken (7, 8) einen mehrfach verzweigten Strompfad für einen zwischen dem Innenbereich (2) und dem Außenbereich (3) fließenden elektrischen Strom bilden.

2. Wabenkörper nach Anspruch 1, bei dem zwischen jeweils zwei einander benachbarten und voneinander beabstandeten Windungen in jedem um die Achse (1) gemessenen Winkelbereich kleiner als 360° höchstens zwei Brücken (7, 8) liegen.

3. Wabenkörper nach Anspruch 1 oder 2, bei dem
a) jeweils zwei einander benachbarte und voneinander beabstandete Verbindungen (7, 8) bezüglich der Achse (1) einen Winkelabstand haben;
b) die Summe jeweils zweier unmittelbar aufeinanderfolgender Winkelabstände zwischen etwa 480° und etwa 600° beträgt;
c) von jeweils zwei unmittelbar aufeinanderfolgenden Winkelabständen zumindest ein Winkelabstand nicht größer als etwa 240° ist.

4. Wabenkörper nach Anspruch 3, bei dem jeder Winkelabstand größer als 120° ist.

5. Wabenkörper nach Anspruch 3, bei dem jeder Winkelabstand etwa 240° beträgt.

6. Wabenkörper nach Anspruch 3, bei dem ein erster Winkelabstand zwischen etwa 120° und etwa 240° und ein zweiter Winkelabstand von etwa 360° abwechselnd vorliegen.

7. Wabenkörper nach Anspruch 6, bei dem der erste Winkelabstand etwa 180° beträgt.

8. Wabenkörper nach einem der vorhergehenden Ansprüche, bei dem jede Brücke (7, 8) im wesentlichen ein durch den Wabenkörper hindurchgehender Streifen parallel zu der Achse (1) ist.

9. Wabenkörper nach einem der vorhergehenden Ansprüche, bei dem zwischen den Brücken (7, 8) Isolierschichten (9) zwischen jeweils zwei einander benachbarten und voneinander beabstandeten Windungen liegen.

10. Wabenkörper nach Anspruch 9, bei dem die Isolierschichten (9) keramische Schichten sind.

11. Wabenkörper nach Anspruch 9 oder 10, bei dem zwischen den Isolierschichten (9) zur Bildung der Brücken (7, 8) Blechstreifen angeordnet sind.

12. Wabenkörper nach Anspruch 9 oder 10, bei dem die Isolierschichten (9) keramische Beschichtungen (10) zumindest eines Bleches (4, 5) und die Brücken (7, 8) Aussparungen (11) zwischen den Beschichtungen (10) sind.

13. Wabenkörper nach einam der vorhergehenden Ansprüche, der
a) in Richtung der Achse (1) von zwei etwa ebenen, etwa senkrecht zur Achse (1) liegenden Stirnflächen (12) begrenzt ist; wobei
b) der Außenbereich (2) eine zwischen den Stirnflächen (12) liegende, etwa parallel zu der Achse (1) ausgerichtete, etwa zylindrische Mantelfläche hat; und wobei c) in die Mantelfläche etwa in der Mitte zwischen den Stirnflächen (12) eine radial und in Umfangsrichtung verlaufende, bis zum Innenbereich (2) reichende Nut (13) hineinragt.

14. Wabenkörper nach einem der vorhergehenden Ansprüche, bei dem alle Windungen paarweise einander benachbart und voneinander beabstandet sind.

## Claims

1. An electrically heatable honeycomb body
a) which has an axis (1), an inner region (2) surrounding the axis (1) and an outer region (3) spaced from the axis (1);
b) which between the inner region (2) and the outer region (3) has at least one stack (6) which comprises at least one sheet (4, 5) and which is wound around the inner region (2) in the manner of a spiral with a plurality of windings without brazing foils or brazing sheets also being wound therein in a spiral configuration,
characterised in that the windings include a multiplicity of windings which are adjacent to each other in pairs and spaced from each other and electrically insulated; and
c) it has a plurality of bridges (7, 8) of which each respectively mechanically and electrically interconnects two mutually adjacent and mutually spaced-apart windings; wherein
d) the windings and the bridges (7, 8) form a multiply branched current path for an electric current flowing between the inner region (2) and the outer region (3).

2. A honeycomb body according to claim 1 wherein there are at most two bridges (7, 8) between each two mutually adjacent and mutually spaced-apart windings in each angular region as measured around the axis (1) of less than 360°.

3. A honeycomb body according to claim 1 or claim 2 wherein
a) each two mutually adjacent and mutually spaced-apart connections (7, 8) have an angular spacing with respect to the axis (1);
b) the sum of each two immediately consecutive angular spacings is between about 480° and about 600°; and
c) of each two immediately consecutive angular spacings at least one angular spacing is no greater than about 240°.

4. A honeycomb body according to claim 3 wherein each angular spacing is greater than 120°.

5. A honeycomb body according to claim 3 wherein each angular spacing is about 240°.

6. A honeycomb body according to claim 3 wherein there are alternately a first angular spacing of between about 120° and about 240° and a second angular spacing of about 360°.

7. A honeycomb body according to claim 6 wherein the first angular spacing is about 180°.

8. A honeycomb body according to one of the preceding claims wherein each bridge (7, 8) is substantially a strip passing through the honeycomb body parallel to the axis (1).

9. A honeycomb body according to one of the preceding claims wherein between the bridges (7, 8) insulating layers (9) are disposed between each two mutually adjacent and mutually spaced-apart windings.

10. A honeycomb body according to claim 9 wherein the insulating layers (9) are ceramic layers.

11. A honeycomb body according to claim 9 or claim 10 wherein sheet strips are arranged between the insulating layers (9) to form the bridges (7, 8).

12. A honeycomb body according to claim 9 or claim 10 wherein the insulating layers (9) are ceramic coatings (10) on at least one sheet (4, 5) and the bridges (7, 8) are openings (11) between the coatings (10).

13. A honeycomb body according to one of the preceding claims a) which is delimited in the direction of the axis (1) by two
substantially flat end faces (12) which are disposed substantially perpendicularly to the axis (1): wherein
b) the outer region (2) has a substantially cylindrical peripheral surface which is between the end faces (12) and which is oriented substantially parallel to the axis (1): and wherein
c) a groove (13) projects into the peripheral surface substantially centrally between the end faces (12), the groove extending radially and in the peripheral direction and reaching as far as the inner region (2).

14. A honeycomb body according to one of the preceding claims wherein all windings are arranged in pairs in mutually adjacent and spaced-apart relationship.

## Revendications

1. Corps à nid d'abeilles, électriquement chauffable,
a) qui comporte un axe (1), une zone intérieure (2) entourant l'axe (1) et une zone extérieure (3) distante de l'axe (1) ;
b) qui présente, entre la zone intérieure (2) et la zone extérieure (3), au moins un empilement (6), consistant en au moins une tôle (4, 5), enroulée à la manière d'une spirale avec une pluralité d'enroulements, sans former de spirale avec des tôles à braser ou des feuilles à braser intercalées, autour de la zone intérieure (2), caractérisé en ce que les enroulements comportent une pluralité d'enroulements, qui sont voisins par paires et qui sont distants les uns des autres et électriquement isolés ;
c) qu'il présente une pluralité de ponts (7, 8), chacun d'eux reliant chaque fois mécaniquement et électriquement deux enroulements voisins et distants l'un de l'autre ; dans lequel
d) les enroulements et les ponts (7, 8) forment un chemin conducteur à multiples embranchements pour un courant électrique qui circule entre la zone intérieure (2) et la zone extérieure (3).

2. Corps à nid d'abeilles selon la revendication 1, dans lequel entre chaque fois deux enroulements voisins et distants l'un de l'autre, il y a au maximum deux ponts (7, 8) dans chaque plage angulaire, mesurée autour de l'axe (1) et inférieure à 360°.

3. Corps à nid d'abeilles selon la revendication 1 ou 2, dans lequel
a) chaque fois deux connexions (7, 8) voisines et distantes l'une de l'autre ont une distance angulaire par rapport à l'axe (1) ;
b) la somme de chaque fois deux distances angulaires immédiatement successives est comprise entre environ 480° et environ 600° ;
c) au moins une distance angulaire de chaque fois deux distances angulaires immédiatement successives n'est pas supérieure à environ 240°.

4. Corps à nid d'abeilles selon la revendication 3, dans lequel chaque distance angulaire est supérieure à 120°.

5. Corps à nid d'abeilles selon la revendication 3, dans lequel chaque distance angulaire est d'environ 240°.

6. Corps à nid d'abeilles selon la revendication 3, dans lequel sont présentes, en alternance, une première distance angulaire comprise entre environ 120° et environ 240°, et une deuxième distance angulaire d'environ 360°.

7. Corps à nid d'abeilles selon la revendication 6, dans lequel la première distance angulaire est d'environ 180°.

8. Corps à nid d'abeilles selon l'une des revendications précédentes, dans lequel chaque pont (7, 8) est globalement une bande traversant le corps à nid d'abeilles et parallèle à l'axe (1).

9. Corps à nid d'abeilles selon l'une des revendications précédentes, dans lequel, entre les ponts (7, 8), des couches isolantes (9) sont placées entre chaque fois deux enroulements voisins et distants l'un de l'autre.

10. Corps à nid d'abeilles selon la revendication 9, dans lequel les couches isolantes (9) sont des couches en céramique.

11. Corps à nid d'abeilles selon la revendication 9 ou 10, dans lequel des bandes en tôle sont disposées, entre les couches isolantes (9), pour former les ponts (7, 8).

12. Corps à nid d'abeilles selon la revendication 9 ou 10, dans lequel les couches isolantes (9) sont des revêtements céramiques (10) d'au moins une tôle (4, 5) et les ponts (7, 8) sont des évidements (11) entre les revêtements (10).

13. Corps à nid d'abeilles selon l'une des revendications précédentes,
a) qui est délimité en direction de l'axe (1) par deux surfaces frontales (12) à peu près planes et situées à peu près perpendiculairement à l'axe (1) ;
b) dans lequel la zone extérieure (2) a une surface d'enveloppe, à peu près cylindrique, située entre les surfaces frontales (12) et dirigée à peu près parallèlement à l'axe (1) ; et
c) dans lequel une rainure (13), s'étendant dans la surface d'enveloppe, de manière radiale et dans le sens de la périphérie, à peu près au centre entre les surfaces frontales (12), arrive jusque dans la zone intérieure (2).

14. Corps à nid d'abeilles selon l'une des revendications précédentes, dans lequel tous les enroulements sont voisins par paires et sont distants les uns des autres.
